# EUROPEAN PATENT APPLICATION

(11) **EP 1 172 735 A1**
(43) Date of publication of application: **16.01.2002**
(21) Application number: 00202428.9
(22) Date of filing: 11.07.2000
(51) Int. Cl.: G06F 17/30

(54) **Database conversion or integration**

(71) Applicant: Columbus IT Partner Consulting A/S, 8240 Risskov (DK)
(72) Inventor: Bonde Fjby, Thomas, 8240 Risskov (DK)
(74) Representative: Elmeros, Claus

(57) **Abstract**

The invention relates to database conversion or integration editor (DCE) comprising data input means for inputting of database representing fields (DRF) having an input syntax (IS),
said conversion editor comprising
means for converting said database representing fields (DRF) into an intermediate database (TDB) of converted database representing fields (CDRF), said converted database representing fields (CDRF) having an output syntax (OS).

According to the invention, simple conversion may applied initially, while a more complicated establishment of relations may be postponed to a later stage of the conversion process by means of suitable database program logic control.

## Description

### Field of the invention

The invention relates to a database conversion or integration editor (DCE) according to claim 1.

Moreover, the invention relates to a method of converting data from at least one input database representing flat-file format (XF) into an output database (ODB) according to claim 15.

Moreover, the invention relates to a method of converting input records (IR) contained in an input database (IDB) to output records (OR) contained in an output database (ODB) according to claim 17.

Moreover, the invention relates to a graphical user interface arrangement for preparing and facilitating conversion of a subset of data from a first database having a first format to a second database having a second format according to claim 22.

Moreover, the invention relates to a graphical user interface arrangement for preparing and facilitating integration or migration of a subset of data from a first database having a first format to a second database having a second format according to claim 25.

Moreover, the invention relates to a graphical user interface arrangement for preparing and aiding conversion, integration or migration of a subset of data from a first database having a first format to a second database having a second format according to claim 26.

### Background of the invention

The invention relates to database programs and data related to database programs. Data bases may be applied for several different purposes such as inventory management, management of test results etc. In particular, databases are utilized for corporate business management, i.e. so-called enterprise resource planning programs, ERP. In particular, the invention deals with conversion of data from one system to another.

Several different standards defining the way records of database systems are represented have been developed over the years.

Converting data from one version of a data base program to another is well- known within the art. Usually, a new release of a database program is more or less comparable. At least in the sense that the data operated by the database program will follow the same syntax.

Nevertheless, from time to time ERP suppliers decide to change the basic structure of the database programs including the fundamental syntax. Consequently, a company applying the old database is left with the choice of either maintaining the old ERP system operating on the already established company data or switching from the old ERP system to the new system.

Apparently, each choice has its drawbacks and the only thing which is for certain is that the company will have to allocate further resources to ERP maintenance somewhere down the road.

Evidently, maintaining the old ERP system offers the possibility of maintaining old data. However, the old ERP system will inevitably lack support and necessary program features over a relatively short (unknown) period of time.

Turning now to the to possibility of replacing the old ERP system by a new ERP system, huge amounts of resources must be applied with the purpose of converting old data into a new database fitting the ERP system.

Many ways of converting data from one format to another have been disclosed within prior-art.

Basically, prior-art converting methods fall within one of the below-mentioned categories.

The first category of data conversion relates to a somewhat tough conversion implying the establishment of a converting tool, a driver, comprising an input and an output interface. The driver is preprogrammed in such a way that data of a certain kind may be converted directly into a new database capable of being operated by the new database program. This type of conversion implies comprehensive programming when establishing the converting tool due to the fact that the application logic has to be taken into consideration when incorporating it in the tool in order to obtain a true conversion.

A second kind of data conversion, and the most common, is basically that programmers convert each record of the old database by means of more or less primitive IF-THEN programming. This type of programming is almost not supported by existing tools, and the programmer may typically rely on code programming, which may be supported by different types of data mapping programs and different types of import/export tools incorporated in the ERP system.

It is an object of the invention to provide a converting tool which may facilitate easy and quick data conversion between different database formats.

### Summary of the invention

The invention relates to a database conversion or integration editor (DCE) according to claim 1 comprising
data input means for inputting of database representing fields (DRF) having an input syntax (IS),
said conversion editor comprising
   means for converting said database representing fields (DRF) into an intermediate database (TDB) of converted database representing fields (CDRF), said converted database representing fields (CDRF) having an output syntax (OS).

According to the invention, syntax is understood as the various kinds of signs occurring in a data processing system and possible arrangements of such signs, complete abstractions being formed on the basis of the signs.

Hence, syntax is understood as a way of storing information. An example of such data representation is integer, character or e.g. a certain predefined syntax of the data field of a record, i.e. a convention defining a field comprising a predefined maximum of characters and a further requirement determining that unused character fields must contain e.g. a blank-character.

According to the invention, simple conversion may applied initially, while a more complicated establishment of relations may be postponed to a later stage of the conversion process.

Typically, the initial conversion need not to be checked by the database program application logic.

When, as stated in claim 2, said means for converting said database representing fields into an intermediate database (TDB) comprises graphical mapping means (82) adapted to define the corresponding input syntax (IS, 83) and output syntax (OS, 84), and
said graphical mapping means (82) comprises fill-in tables for user inputting of corresponding input field (83) values and output field (84) values, a further advantageous embodiment of the invention has been obtained.

An advantage of the utilization of simple fill-in table conversions according to the invention is that pre-conversion or pre-conversions may be expected to provide an error-free conversion due to the simplicity of pre-conversion methods. Consequently, when debugging for errors in the conversion, the search may be reduced to examining successive conversions only.

A database representing field may e.g. be a field contained in a flat-file representation of a table of records, and the database representing field may e.g. be a listed comma-separated or blank-separated format.

Evidently, the editor may contain a bank of pre-filled mapping means adapted to convert the syntax of standard data tables into the desired output syntax, i.e. the syntax accepted by the receiving database program.

When, as stated in claim 3, the editor comprises graphical data structure mapping (61, 62, 63, 64, 65, 69), said graphical data structure mapping (61, 62, 63, 64, 65, 69) being adapted to define the data structure of the database representing fields (DRF) and/or the converted database representing fields (CDRF), a further advantageous embodiment of the invention has been obtained.

When, as stated in claim 4, the editor comprises means for establishing a writing of the converted database representing fields (CDRF) into an output database (ODB) by means of the database program control logic (DPCL), a further advantageous embodiment of the invention has been obtained.

According to the embodiment of the invention, the database control logic is the logic programmed and associated with the database program. The control logic ensures that data actually written into the database operated by the database program match the requirements of the database program and/or the current database program application.

Applying the program language associated with the output database and incorporating it in the control logic of the database facilitates a high degree of reliability due to the fact that data stored in the database will naturally always match the database control logic.

It should be noted that the control logic of a database program may both imply high-and low-level logic in the sense that kernel logic may e.g. be incorporated in the basic low-level database program, such as SQL, while application logic and business logic are typically incorporated in high-level logic.

When, as stated in claim 5, said writing of the converted database representing fields (CDRF) into an output database (ODB) is performed in dependency of the data structure defined by means of said graphical data structure mapping (61, 62, 63, 64, 65, 69), a further advantageous embodiment of the invention has been obtained.

When, as stated in claim 6, said database program control logic (DPCL) is established by means of an object-oriented database program language associated with the database program, a further advantageous embodiment of the invention has been obtained.

An example of such programming language within the scope of the invention is the programming language incorporated in the Damgaard Axapta.

The programming language should preferably be integrated in the editor.

When, as stated in claim 7, the editor comprises graphical selecting means (53; 59, 59A, 59B) for selecting at least one group of data fields (SIF; SCF) or combinations of groups of fields to be converted into the intermediate database (TDB) and/or the output database (ODB), a further advantageous embodiment of the invention has been obtained.

When, as stated in claim 8, said group of fields being data files comprised in a flat-export file, said flat-file preferably comprising fields listed in field lines (FL), each field line (FL) indicating a relation between the fields comprised in the field line (FL), said fields of each field line being similarly organized and thereby establishing an implicit categorization of the individual fields, a further advantageous embodiment of the invention has been obtained.

Evidently, header and trailer lines may be comprised in a file according to the chosen export format or the chosen input data field delivery method.

When, as stated in claim 9, the editor comprises a graphical status manager (GSM, 171), said graphical status manager (GSM, 170, 171) comprising means for manually or automatically establishing the conversion status of the group of data fields (SIF; SCF) associated with the graphical status manager (GSM, 170, 171), a further advantageous embodiment of the invention has been obtained.

Manual establishment of the conversion status of a group of fields, e.g. a file, may e.g. be a user-established setting of the conversion status indicating that the data file is ready for conversion, or, e.g. that any subsequent conversion should by-pass the specific file.

Automatic establishment of the conversion status may e.g. be established on the basis of error signals or reports fed back to the database program control logic subsequent to a failed conversion attempt. Such a flag would reveal or at least indicate the origin and error type to the programmer operating the editor.

Another possible automatic establishment of the conversion status may e.g. be established on the basis of a feed-back to the database program control logic determining that the conversion of the specific selected group of fields has succeeded. A "processed" flag of an associated group of fields may then be presented to the user.

A further possible automatic establishment of the conversion status may e.g. be made by means of error reporting means incorporated in the editor for controlling the conversions or some of the conversion to the intermediate database. Evidently, such error reporting generator would typically be dedicated to the monitoring of quite simple conversion errors. It should be noted that fatal errors typically occur when violating the quite complicated control logic of the database. Therefore, pre-error checks performed when converting into the intermediate database or error checks performed subsequent to conversion into the intermediate database but before writing into the output database should typically deal with quite simple (obvious) errors, while detection of more complicated errors dealing with e.g. violations of the database program logic should preferably be left to the database program during writing into the database via the database program control logic.

When, as stated in claim 10, the editor comprises a data processing manager (DPM) controlling the execution of the conversion of said groups of fields, an advantageous embodiment of the invention has been obtained.

When, as stated in claim 11, the data processing manager (DPM) controls the execution of the conversion of said groups of fields (53; 59, 59A, 59B) on the basis of the conversion status established by means of said graphical status manager (GSM, 171), a further advantageous embodiment of the invention has been obtained.

When, as stated in claim 12, the editor comprises error detecting and error reporting means adapted to detect violations of predefined conversion rules incorporated in the editor, a further advantageous embodiment of the invention has been obtained.

Error reporting means incorporated in the editor may check the conversions or some of the conversions in the intermediate database. Evidently, such error reporting generator would typically be dedicated to monitoring of quite simple conversion errors. It should be noted that fatal errors typically occur when violating the quite complicated control logic of the database. Therefore, pre-error checks performed during conversion into the intermediate database or errors checks performed subsequent to the conversion into the intermediate database but before writing into the output database should typically deal with quite simple (obvious) errors, while detection of more complicated errors dealing with e.g. violations of the database program logic should preferably be left to the database program during writing into the database via the database program control logic.

On the other hand, the editor may of course incorporate quite complicated error detection routines if so desired.

When, as stated in claim 13, the editor comprises a graphical structure monitoring area (160, 151) for monitoring the contents and the structure of the converted data representing field (CDRF) stored in said intermediate database (TDB), a further advantageous embodiment of the invention has been obtained.

The graphical structure monitoring area makes it possible for a user of the editor to monitor the actually pre-converted data in the individual field. Moreover, the user may gain an overview of the mapping between the data fields contained in the intermediate database and the data structure defined by the editor. Hence, obvious faults such as missing data in certain editor fields may easily be detected. Moreover, some types of conflicts may easily be detected due to the fact that the visual presentation of the field descriptions compared with the actual data fed into the intermediate storage, the document library, may reveal to the user that e.g. editor field contents of "188888" is probably not a "date"-field.

When, as stated in claim 14, the graphical structure monitoring area (160, 151) comprises at least one editor field comprising data, a descriptive statement (160A) and the actual converted data representing field (CDRF) being stored in said intermediate database (TDB), a further advantageous embodiment of the invention has been obtained.

The invention relates to a method of converting data from at least one input database representing flat-file format (XF) into an output database (ODB) according to claim 15,
said output database (ODB) comprising a set of output records (OR), each of said output records (OR) comprising at least one output field (OF), and
said output database (ODB) defining an output syntax (OS) for at least one, preferably all output fields (OF),
said output database comprising at least one relation between at least two of said output fields (OF),
said method comprising at least one initial step of converting the syntax of the data from the at least one input data base (IDB) into the output syntax (OS) and storing the syntax-converted data into an intermediate database (TDB),
said method comprising at least one subsequent step of applying at least one relation between the syntax-converted data and the storing of said syntax-converted data into said output database associated with the at least one relation.

According to the invention, simple conversion may applied initially, while a more complicated establishment of relations may be postponed to a later stage of the conversion process.

Typically, the initial conversion need not to be checked by the database program application logic.

When, as stated in claim 16, the establishment of the at least one relation in the output database (ODB) is established by means of structured feeding of the syntax-converted data or a part of the syntax converted data into the database via a database program control logic, a further advantageous embodiment of the invention has been obtained.

Moreover, the invention relates to a method of converting input records (IR) contained in an input database (IDB) to output records (OR) contained in an output database (ODB) according to claim 17,
said output records (OR) comprising output fields (OF) having a predefined output syntax (OS),
said input records (IR) comprising input fields (IF) having a predefined input syntax (IS),
said method comprising steps of mapping at least two input fields (IF) of said input database (IDB) into an intermediate database (TDB),
said mapping comprising steps of converting the syntax (IS) of said at least two input fields (IF) into said predefined output syntax (OS).

When, as stated in claim 18, said mapping comprises steps of converting the syntax (IS) of substantially all input fields (IF) of the input database (IDB) into said predefined output syntax (OS), a further advantageous embodiment of the invention has been obtained.

When, as stated in claim 19, said mapping comprises steps of
exporting the input database (IDB) or at least part of the input database (IDB) to a representation or at least part of a representation of said input database,
said representation comprising at least two field representations (FR), each representing an input field (OF) of the input database (ODB),
identifying at least two field representations (FR) into said representation and conversion,
the syntax of said at least two field representations (FR) into said predefined output syntax (OS), a further advantageous embodiment of the invention has been obtained.

An export format may e.g. be comma-separated tables of related fields.

When, as stated in claim 20, said mapping includes at least one check routine adapted to perform a preliminary check (PC) on fields of the intermediate database (TDB), said fields being predetermined, a further advantageous embodiment of the invention has been obtained.

When, as stated in claim 21, at least two fields of the intermediate database (TDB) having the input syntax (IS) are written into the output database (ODB) by means of the application logic (AL) of the input database (IDB), a further advantageous embodiment of the invention has been obtained.

According to the invention, the terms input database and output database determine the conceptual functionality of the database, i.e. the input database delivering the data to be converted and the output database receiving the converted data. Correspondingly, the terms input records and input fields should merely be understood as records and fields comprised in the input database rather than a functionality of the records and fields. Likewise, an output field should merely be understood as a field belonging to the output database.

Even more trivially, output and input syntax is determined by the output and input databases, respectively.

The application logic of a database is the logic incorporated in a database program establishing the relations between fields, records and tables once data are entered via the user interface of the database. The application logic of a database may thus generally be utilized both by regular writing of data into the fields of a graphical user interface or by means of a programming language incorporated in the database program for control of relations between the tables.

According to the invention, syntax is understood as the various kinds of signs occurring in a data processing system and possible arrangements of such signs, complete abstractions being formed on the basis of the signs.

Hence, syntax is understood as a way of storing information. An example of such data representation is integer, character or e.g. a certain predefined syntax of a data field of a record, i.e. a convention defining a field comprising a predefined maximum of characters and a further requirement determining that unused character fields must contain e.g. a blank-character.

Moreover, the invention relates to a graphical user interface arrangement for preparing and facilitating conversion of a subset of data from a first database having a first format to a second database having a second format according to claim 22, said user interface comprising
graphical means for selecting an area (A1) for identifying a location of the subset(s) of data,
graphical means for selecting an area (A2) for defining format and structure of the subset(s) of data,
graphical means for selecting an area (A3) for selecting and/or defining one or more conversion elements for a record or records contained in the subset or subsets of data, and
graphical means for selecting an area (A4) for configuration of at least one partial conversion of a subset of data.

Hereby, a graphical conversion tool is made available which allows the user to design a conversion or integration/migration of subsets of data in a logical, user-friendly and efficient manner.

When, as stated in claim 23, the conversion elements may be standard, predefined and/or user-defined conversion tables, a further advantageous embodiment of the invention has been obtained.

When, as stated in claim 24, the conversion elements may be standard, predefined and /or user-defined functions, a further advantageous embodiment of the invention has been obtained.

Advantageously, the design of the conversion or integration/migration system may be carried out by applying a number of standard, predefined/user-defined conversion tables, and/or (simple) functions etc. which may be selected by graphical selecting means, hereby minimizing the work involved with specifying a large number of basic and/or trivial conversions of data.

Moreover, the invention relates to a graphical user interface arrangement for preparing and facilitating integration or migration of a subset of data from a first database having a first format to a second database having a second format according to claim 25, said user interface comprising
graphical means for selecting an area (A1) for identifying a location of the subset(s) of data,
graphical means for selecting an area (A2) for defining format and structure of the subset(s) of data,
graphical means for selecting an area (A3) for selecting and/or defining one or more conversion elements for a record or records contained in the subset or subsets of data, and
graphical means for selecting an area (A4) for configuration of at least one partial conversion of a subset of data.

Moreover, the invention relates to a graphical user interface arrangement for preparing and aiding conversion, integration or migration of a subset of data from a first database having a first format to a second database having a second format according to claim 26, said user interface comprising
graphical means for selecting an area (A1) for identifying a location of the subset(s) of data,
graphical means for selecting an area (A2) for defining format and structure of the subset(s) of data,
graphical means for selecting an area (A3) for selecting and/or defining one or more conversion elements for a record or records contained in the subset or subsets of data,
graphical means for selecting an area (A4) for configuration of at least one partial conversion of a subset of data, and
graphical means for selecting one or more partial conversions and displaying a graphical result of the partial conversion(s).

Hereby, a graphical conversion/integration/migration tool is made available which allows the user to select a number of partial conversions and obtain information of the validity of the respective partial conversions in a very logical manner, making it possible in a very efficient manner to discover at which point or step the partial conversion errors occur.

When, as stated in claim 27, the graphical means for selecting one or more partial conversions and displaying a graphical result of the partial conversion(s) comprises graphical means for selecting a conversion comprising two or more subsequent partial conversions for one or more subsets of data, an advantageous embodiment of the invention has been obtained.

Hereby, a total conversion incorporating two or more partial conversions may be selected for a number of subsets of data, e.g. files, and the result of the validation may be displayed for all involved partial conversions. Thus, the result will be immediately apparent.

### The drawings

This invention will be described below with reference to the drawings of which
- fig. 1: shows the basic principles conversion or migration according to the invention,
- fig. 2: illustrates the nature of transmitting and receiving data sources according to the invention
- fig. 3: illustrates a selective conversion of groups of data according to the invention,
- fig. 4: illustrates the opening session of a converting tool according to the invention,
- fig. 5: illustrates the selection of the setup structure node selecting a group of files,
- fig. 6: illustrates the definition of the output structure of the converted data.
- fig. 7: illustrates the possibility of applying conversion editor-defined functions to and/or from the document library forming the intermediate database.
- fig. 8: shows a graphical mapping table incorporated in the conversion tool.
- figs. 9&10: illustrate the structural setup of data fields contained in the document library,
- fig. 11: illustrates the initiation of a top-level conversion to the output database.

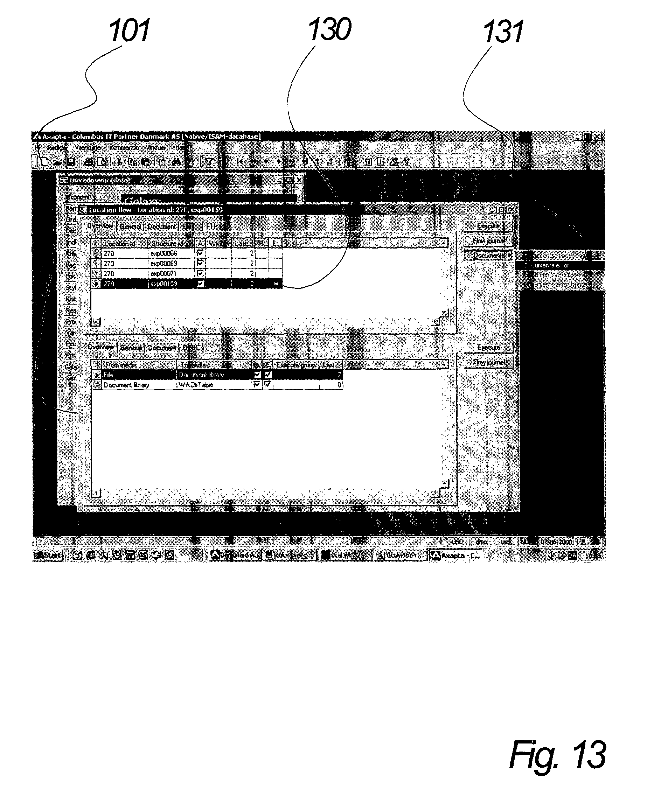

- figs. 12&13: illustrate an error-reporting tool of the embodiment according to the invention,
- figs. 14 to 17: illustrate field-structure mapping and debugging means according to the invention,
- fig. 18: shows a successfully completed conversion.

### Detailed description

The illustrated embodiment of the invention is programmed on the basis of an ERP system called Damgaard AXAPTA supplied by Damgaard A/S. The illustrated embodiment is adapted to conversion of data exported from an ERP system such as Damgaard XAL to data which may be operated by Damgaard AXAPTA.

Damgaard XAL is also supplied by Damgaard A/S.

Evidently, the conversion tool may be adapted to convert to and from almost every known database format.

Likewise, the illustrated embodiment may be designed for several integration models, such as
Fixed length format Ascii files
Character separated Ascii files
ODBC exchanging
IBM MQ series
Microsoft MQ series
DLL integration for TeleCon
EDI format EDIMatic
Oracle SQL integration
Axapta Conversion
XML
Bizztalk
Ftp

The illustrated module has been coded in Damgaard Axapta UK and, consequently, the module must be translated if the application has been made in another language.

The illustrated module offers a general reading of data into Damgaard Axapta. However, client specific applications or adaptations must evidently be programmed in Axapta, i.e. the receiving program in order to benefit fully from the invention.

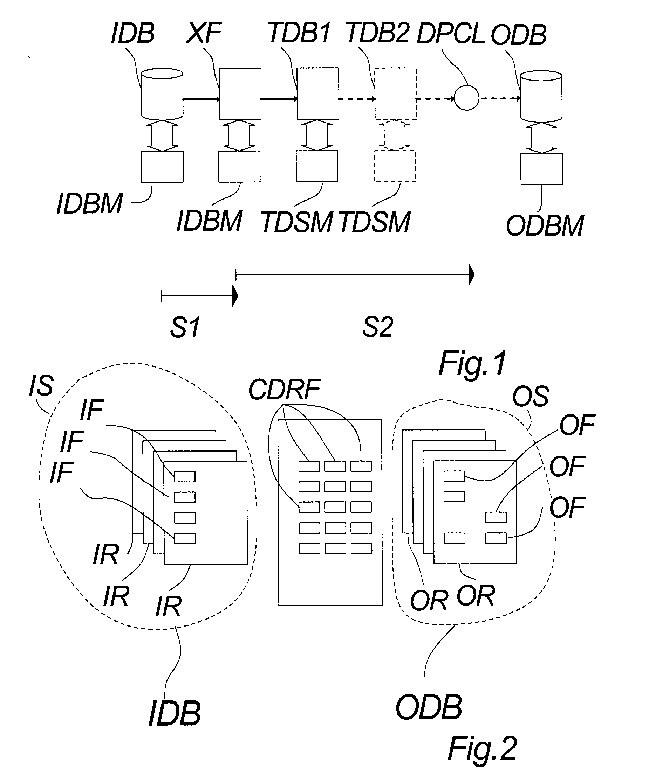

Fig. 1 illustrates the basic principles of an embodiment according to the invention.

The illustrated process illustrates the workflow of a conversion tool according to one embodiment of the invention.

The workflow comprises two principle process steps, S1, S2.

The first process step, S1, relates to export of an input database or a part of an input database IDB stored by input database storing means IDBM. The database is exported to a more or less flat-file export format, XF stored by corresponding export database storing means XDBM.

The first process step, S1, will typically be performed on the platform of the exporting database by means of suitable drivers incorporated in the database program.

Possible export formats or methods may e.g. be
- Fixed length format Ascii files
- Character separated Ascii files
- ODBC exchanging
- IBM MQ series
- Microsoft MQ series
- DLL integration for TeleCon
- EDI format EDIMatic
- Oracle SQL integration
- Axapta Conversion
- XML
- Bizztalk
- Ftp: File transfer protocol

According to the preferred embodiment described below, the above-mentioned export will be described as a separate process step to be performed by the exporting database. Nevertheless, it should be noted that the "exporting drivers" establishing the export format might be incorporated in a conversion tool according to the invention.

The second process step, S2, involves main routines of one embodiment of the invention.

The second step comprises steps of reading the exported format, e.g. comma-separated files, from the export database storing means XDBM.

The export format XF comprises a plurality of data fields organized in a particular manner, e.g. in files comprising a lot of table listings of associated data.

If, on the other hand, an exchange by means of ODBC is preferred, the ODBC-retrieved data from the input database IDB would typically be fed directly to the below-mentioned first intermediate database, without any storing in an export format XF.

In a first process sub-step, the associated data are now mapped into a first intermediate database TDB1, which is stored by intermediate database storing means TDSM.

In a second optional process sub-step, the associated data are mapped into a second intermediate database TDB2, which is similarly stored by intermediate database storing means TDSM. As stated, this second process is optional and will in many cases be omitted. On the other hand, it may be preferably to provide the system with a third or several intermediate databases.

The associated data from the first intermediate database TDB1, if this is the only intermediate database, is subsequently mapped into an output database ODB stored by output database means ODBM.

If one or more intermediate databases TDB2 - TDBn are involved in the system, the output data from the last of these will be the data mapped into the output database ODB.

When the associated data are mapped to the output database ODB, the associated data are provided with relations by the output database ODB, which relations are an inherent part of the output database ODB. Thus the contents of the data will gain their real value when stored by the output database ODB. The associated data are mapped into the database ODB via database program control logic DPCL.

The mapping will then typically imply insertion into the output database ODB by means of a program language associated with the applied database program.

According to the invention, such database programming language should be object-oriented in order to apply the application logic and the kernel logic to the writing of the output database in a relatively simple way.

According to a below-mentioned embodiment of the invention, such programming may e.g. be a JAVA-like language which is the language associated with Damgaard AXAPTA.

By mapping the data from the export format XF to the first intermediate database or by mapping the data from a intermediate database to a further intermediate database, a number of trivial data conversions data may be performed, while a final conversion complying with the structure and relations of the output database ODB is preferably carried out as the last of these partial conversions.

Optionally, part of the more complex conversion processes may be performed as part of the mapping of the intermediate database or databases.

Fig. 2 illustrates the above-mentioned process flow in detail.

The input database IDB comprises a plurality of input records IR. The input records comprises input fields IF, and the input fields are established according to an input syntax (IS) defined by the database program operating the input database.

The input field IR is now, subsequent to the above-mentioned step 1, mapped into the intermediate database (TDB) as a plurality of converted input fields representing elements CDRF, and the IS syntax of the fields is now converted into an output syntax OS. Still, the input field representing elements CDRF are loosely associated in the sense that the only relations between the fields are the implicit relations indicated by the mutual location of the fields in the intermediate database TDB.

Subsequently, the input field representing elements CDRF, now having the output syntax OS, may be inserted into the output database ODB, thereby establishing a relational database of output records OR comprising output fields OF having an output syntax.

Again, it should be stressed that the terms input and output should only be understood as a definition of a relationship between the database elements. Thus, an output field does not describe a field which may only be applied for the physical action of outputting data, but rather as a field belonging to the output database.

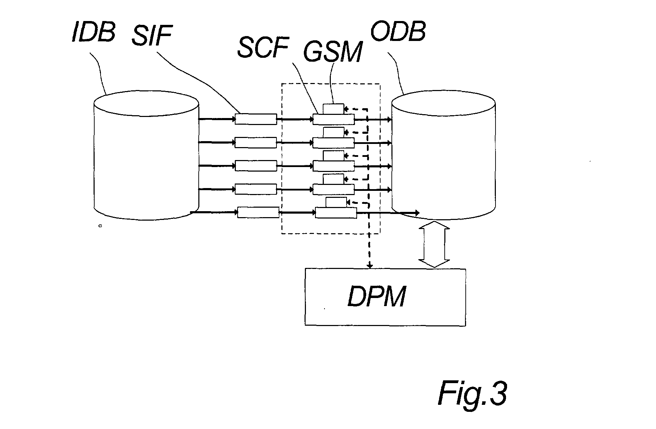

Turning now to fig. 3 a further important aspect of the invention will be briefly introduced.

According to the illustrated embodiment, data are exported from an input database IDB to groups of data fields SIF. Each group may e.g. be contained in a comma-separated file.

The established groups of fields SIF may now be converted into the intermediate database individually. The illustrated groups of fields SIF are converted into groups of converted fields SCF. According to the above-mentioned embodiment of the invention, this conversion will imply the conversion of the syntax of the fields contained in the groups into the output syntax OS matching the syntax or substantially matching the syntax of the output database program operating the output database ODB.

The interesting feature is now that conversion into the output database may be performed individually, one group at a time, or evidently, by several chosen groups at a time.

This conversion into the output database is initially operated by means of a graphical status manager GSM interacting with a data processing manager DPM.

Each manager GSM, DPM may be partly operated by the user of the integration or conversion software application.

The primary function of the graphical status manager GSM is that of establishing the conversion status of the associated group, either manually or automatically.

Manual establishment of the conversion status of a group of fields, e.g. a file, may e.g. be a user-established setting of a conversion status indication that the data file is ready for conversion, or e.g. that a subsequent conversion should by-pass the specific file.

Automatic establishment of the conversion status may e.g. be established on the basis of error signals or reports fed back to the database program control logic subsequent to a failed conversion attempt. Such a flag would reveal or at least indicate the origin and error type to the programmer operating the editor.

Another possible automatic establishment of the conversion status may e.g. be established on the basis of a feed-back to the database program control logic determining that conversion of the specific selected group of fields has been successful. A "processed" flag of an associated group of fields may then be presented to the user.

A further possible automatic establishment of the conversion status may e.g. be made by means of error reporting means incorporated in the editor for control of the conversions or some of the conversion into the intermediate database. Evidently, such error reporting generator would typically be dedicated to the monitoring of quite simple conversion errors. It should be noted that fatal errors typically occur when violating the quite complicated control logic of the database. Therefore, pre-error checks performed during conversion into the intermediate database or errors checks performed subsequent to the conversion into the intermediate database but before writing into the output database should typically deal with quite simple (obvious) errors, while detection of more complicated errors dealing with e.g. violations of the database program logic should preferably be left to the database program during writing into the database via the database program control logic.

The data processing manager DPM controls the execution of conversion of the groups of fields SCF stored in the intermediate database TDB on the basis of the conversion status established by means of the graphical status manager GSM associated with the specific group and also on the basis of user-commands activating the data processing manager DPM in order to execute conversion into the output database of some or all selected groups.

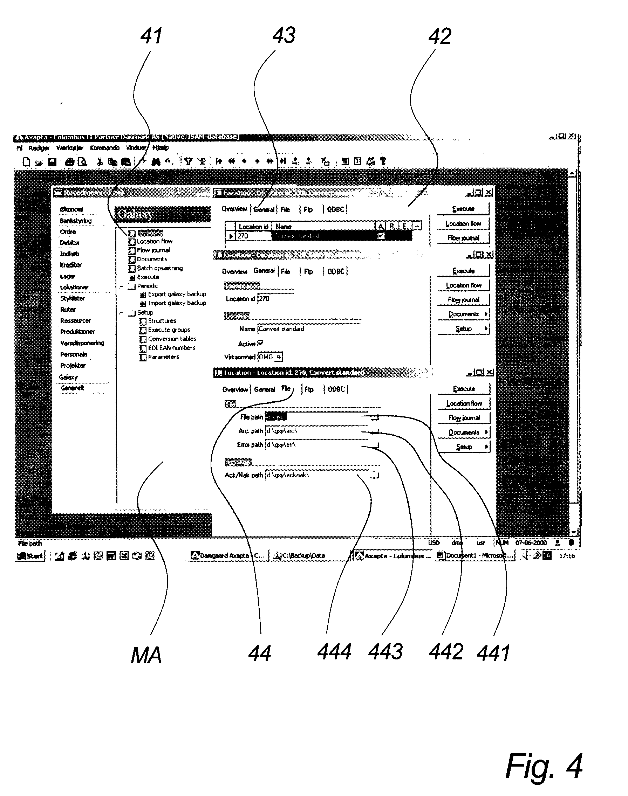

Fig. 4 illustrates the opening session of a converting tool according to the invention.

The converting tool comprises a monitoring area (MA), which may be utilized for establishment of the different conversion steps to be performed by means of the tool.

Initially, it should be noted that the illustrated programming tool is highly graphical, and as it will be noted later on, facilitates a conversion setup which may be operated by programmers having even only modest knowledge of the huge number of details associated with the conversion process.

Initially, a location node 41 has been selected by means of a computer input device, such as a mouse, with the purpose of choosing the location and type of the set of records to be converted.

The selection of the location node 41 implies a pop-up menu (42) adapted to the above-mentioned definition of the structure location.

When the thumbnail index "File" 44 has been selected, the location of the illustrated defined structure and the location of the output files are defined by filling in the fields 441, 442, 443, and the field 441 defining the location of the data source file, the Arc path-field 442 defining the location of approved files, e.g. documents having been processed or converted without errors, and Error path field 443 defining the location of error files, e.g. documents having been processed or converted with error(s). According to the illustrated embodiment, the file path is d:\gxy, the Arc path is d:\gxy\arc\ and the Error path is d:\gxy\err.

The field 444 defines the Ack/Nak path, i.e. the location of acknowledgements (Ack) corresponding to documents received without transmission errors, e.g. with acceptable data, and for negative acknowledgements (Nak) corresponding to documents received with incorrect data.

According to the invention, almost any variety of input formats may be applied other than the illustrated file structure. Other possible input formats may e.g. be Ftp, File transfer protocol, ODBC, XML and many others.

The illustrated embodiment of the invention supports Ftp and ODBC input records.

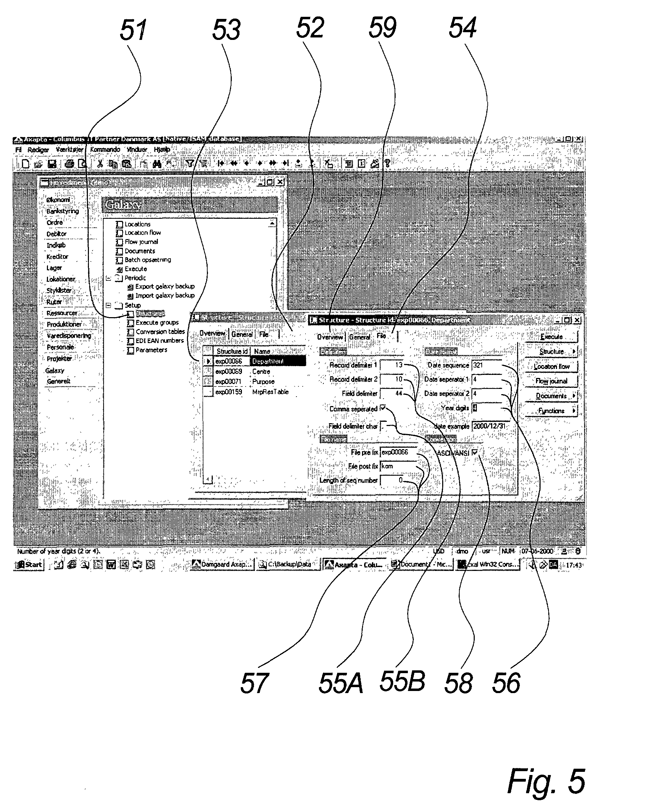

Turning now to fig. 5, a setup structure node 51 has been selected.

The selection of the setup structure node 51 implies opening of a pop-up menu 52 comprising an overview 53 of the files contained in the above-mentioned file library in the data source structure field 441. Furthermore, the overview 53 offers the possibility of selecting the current file to be converted.

Choosing now the thumbnail index "File", 54, basically four different groups of definition fields appear.

The fill-in fields comprise delimiter fields 55A, 55B, date format fields 56, file name fields 57 and finally a conversion field 58.

The delimiter fields 55A, 55B comprise checkboxes 55A for indicating the type of fields, i.e. comma-separated or field-delimited files, the latter providing the possibility of indicating the character for delimiting the fields. The fields 55B will have to be filled in with the ASCII-codes for the delimiters (1 and 2) the records and the ASCII-code for the field delimiter, respectively.

The date format fields 56 must be filled in with information concerning the format used to indicate dates in the source files, e.g. the sequence of day, month and year, the date separators and the number of digits used to indicate the year.

The file name fields 57 contain the name of the respective file comprising the pre-fix, post-fix and length of the sequence number as illustrated.

The conversion field 58 comprises a checkbox for indicating an ASCII/ANSI-conversion of the respective source file.

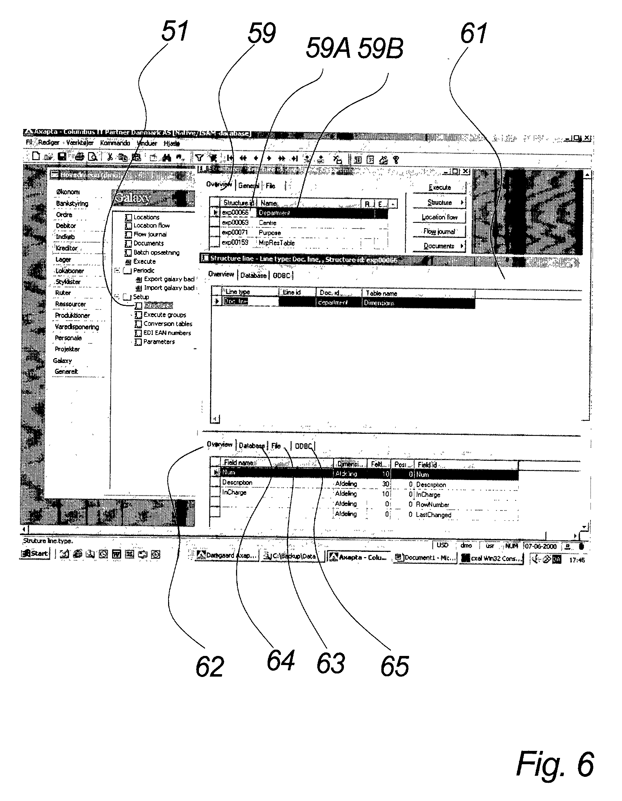

Turning now to fig. 6, the thumbnail index "Overview" 59 of fig. 5 has been selected.

A pop-up menu 61 will now appear with the purpose of defining the output structure of the converted data.

Here, the "Overview" thumbnail index 62 is chosen, giving the basic output structure, i.e. in the current embodiment: the Axapta input structure will comprise three field names, Num, Description and Incharge. The lengths of the field are 10, 30 and 10 characters respectively and the positions determined to be 0. Moreover, each field name may be provided with a nickname by the programmer; Num, Description, InCharge, Rownumber and LastChanged.

Finally, the two last lines may comprise the RowNumber and a LastChanged date.

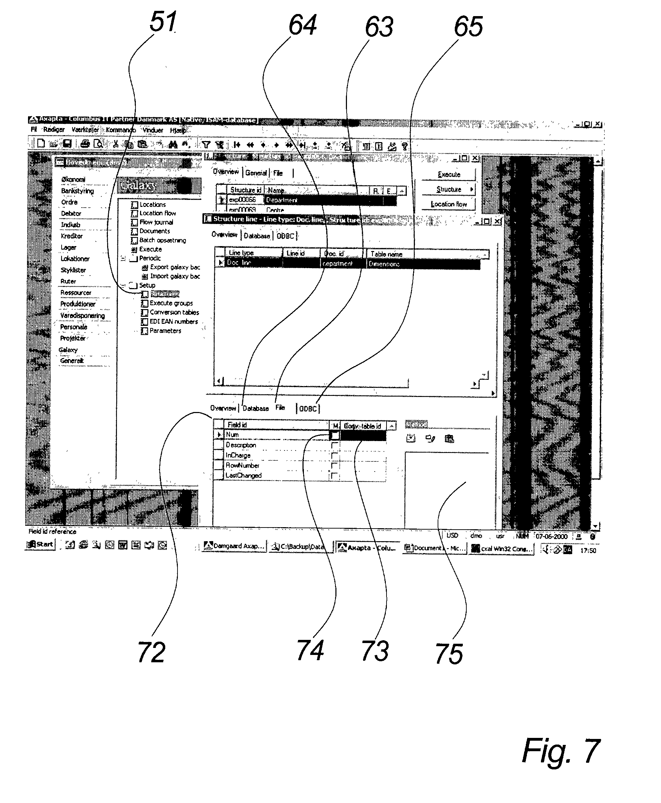

When choosing the file thumbnail index 63 instead, a new menu will appear as illustrated in fig. 7.

Fig. 7 illustrates a very strong feature of the invention.

The conversion tool incorporates the possibility of applying very simple initial conversion of the input data. The primary object of the initial conversion is that of converting the input data into a format which may be read by the receiving program. Such conversion may typically be a conversion of integer or other short form character-based IDs into the basic syntax of the receiving program, typically a multi-character field. More advanced conversion of the relations between the data records should be carried out in a subsequent conversion.

According to the present embodiment of the invention, such changes of e.g. integer code into a more descriptive code may be converted extremely easy due to the fact that the editor comprises tables which may simply be referred to in a "Conversion table ID" field 73, each related to an input field ID 72 when choosing the "File" thumbnail index 63 of the structure line descriptive pop-up menu.

Moreover, the initial conversion offers the possibility of marking the mapping of the specific field as mandatory in the Mandatory field 74.

If a specific field is marked as mandatory, this will have the effect that even if the field contains no value, the field will be preserved during conversion, which is of great importance if a value has to be filled into the field in the output database at a later point. The "Mandatory" marking thus preserves specific fields, even if they have no field value at the actual moment.

Furthermore, the tool comprises a mini-editor area 75. This mini-editor area offers the possibility of adding a degree of complexity to the mapping of the initial conversion. The programming of the mapping methods may be made according to the language of the database program.

It should be noted that the methods defined in the mini-editor area 75 are local in the sense that they only deal with the initial conversion of the specific field(s).

It should, moreover, be noted that all input data are ready for subsequent conversion of relationships between the tables in the sense that all trivial conversion into a new syntax of the individual field has been more or less completed during the first conversion.

When the thumbnail index 64 "Database" is chosen in the menu illustrated in fig. 7, a further mini-editor area (not shown) corresponding to the mini-editor area 75 will appear. In this mini-editor area, it is possible to define methods, e.g. programming for conversion or mapping of data from the intermediate database called the document library to the output database ("database"), e.g. a subsequent conversion. The programming of the mapping methods may be made according to the language of the database program.

A thumbnail index "ODBC" 65 may be selected, if this format is involved. This is analogous to the selection of the "File" thumbnail index 63 as described above and will not be further described in this context. Thumbnail indexes corresponding to other formats, e.g. Ftp, etc. may be provided.

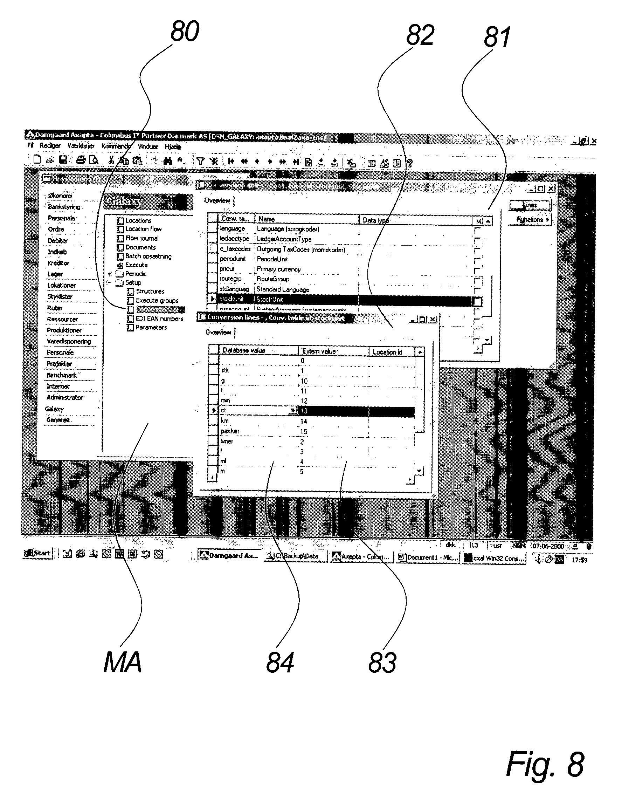

The conversion tables mentioned above in relation to field 73 in fig. 7 will now be described in further detail with reference to fig. 8 which illustrates an example of a conversion table. When the "Conversion Table" 80 is activated in the Monitoring Area MA, a pop-up-menu 81 will appear, comprising the available conversion tables, which may be standard, predefined or user-defined tables.

One of these tables, the "StockUnit"-table has been chosen in fig. 8 and appears as table 82. In this table, the external values, i.e. the incoming values, are listed in a column 83, and the corresponding database values are listed in column 84. As an example the external value "13" is shown which will be converted by the initial conversion to database value "ct".

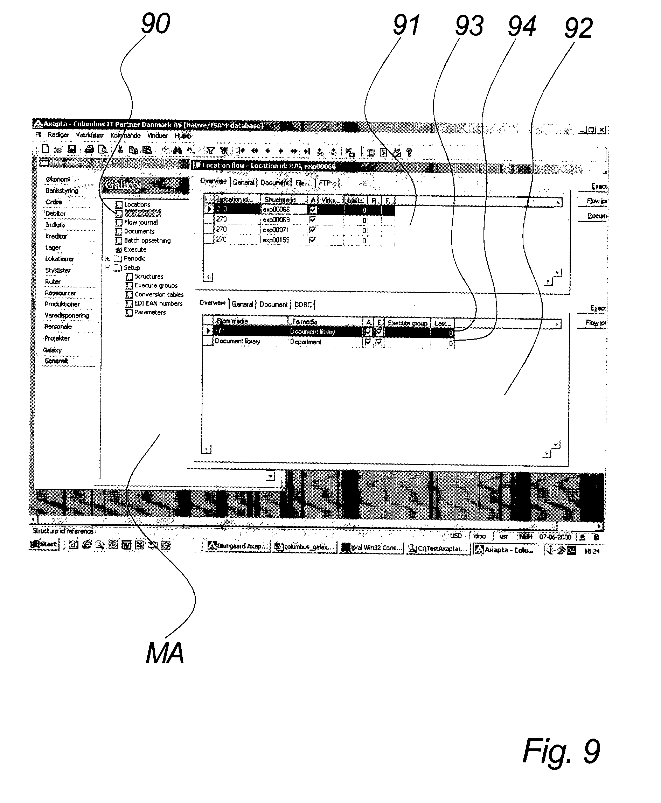

The possibility of performing the conversion in two or more partial conversions will now be described with reference to fig. 9. When the "Location Flow" 90 in the Monitoring Area MA is activated, a pop-up-menu 91 appears. In the thumbnail index "Overview", this menu 91 shows the files which are subject to this example of a conversion, i.e. the same files as illustrated on fig. 5 and 6. When selecting one of these files, e.g. the shown file with the structure ID "exp00066", it is possible to specify a flow of data, i.e. from one media to another media in a flow-menu 92.

In the example shown in menu 92, two partial flows are specified for the file with the structure ID "exp00066". The first partial flow 93 takes the data from the file (the "from media") and transmits them to the intermediate database (the "to media") called the Document Library, and the initial conversion prescribed in connection with the conversion tool shown in fig 7, e.g. the use of conversion tables, mapping using programming etc., will be performed in the process.

The second partial flow takes the data from the intermediate database (the "from media") "Document Library" and transmits them to the output database (the "to media"), in the illustrated example called "Department". During this process, the conversion methods defined in connection with the mini-editor under the thumbnail index 64 "Database" (fig. 7), e.g. programming, takes place by bringing the data to its final form and placing.

Obviously, other media than the ones mentioned above may be selected as the "from" and "to"-media, as the selection of these media has to be made in relation to the actual structures of the databases involved.

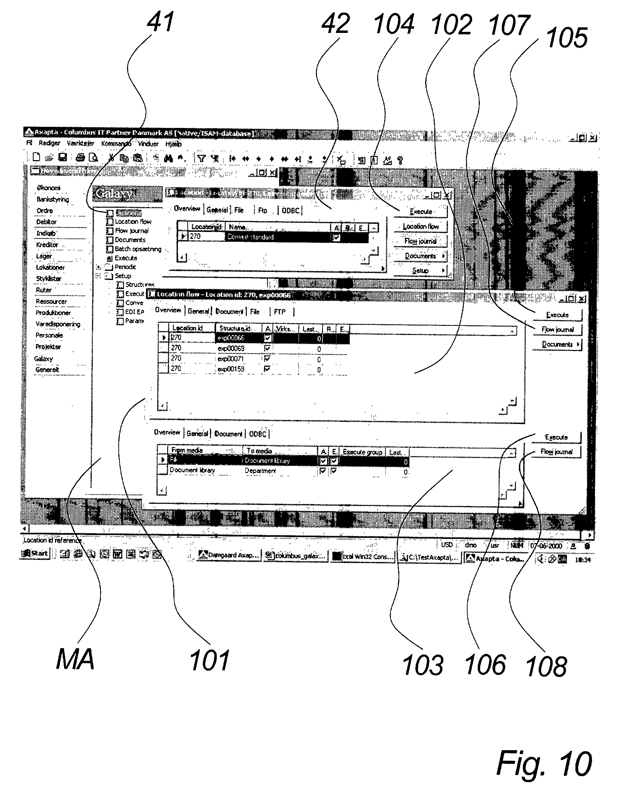

The actual conversion of the data is now ready to take place. The conversion may be done on three levels which will be illustrated in the following with reference to fig. 10.

In the Monitoring Area MA a location node 41 is selected which activates the pop-up-menu 42. In this menu, a top-level conversion is illustrated comprising the conversion illustrated in the box 101, i.e. all location flows defined in box 103 for all structure ID's defined in box 102. As described later on, this conversion may be activated by the button "Execute" 104.

A medium-level conversion comprises all location flows, i.e. all location flows in box 103, defined as a single location ID, e.g. Structure ID "exp00066" as illustrated. Such a conversion may be executed by activating the button Execute 105 in box 102.

Finally, a bottom-level conversion will only comprise one partial flow for a single location ID, e.g. as illustrated the flow from "File" to "Document Library" (box 103) for the location ID with structure ID "exp00066". This conversion may be executed by activating the button "Execute" 106 in box 103.

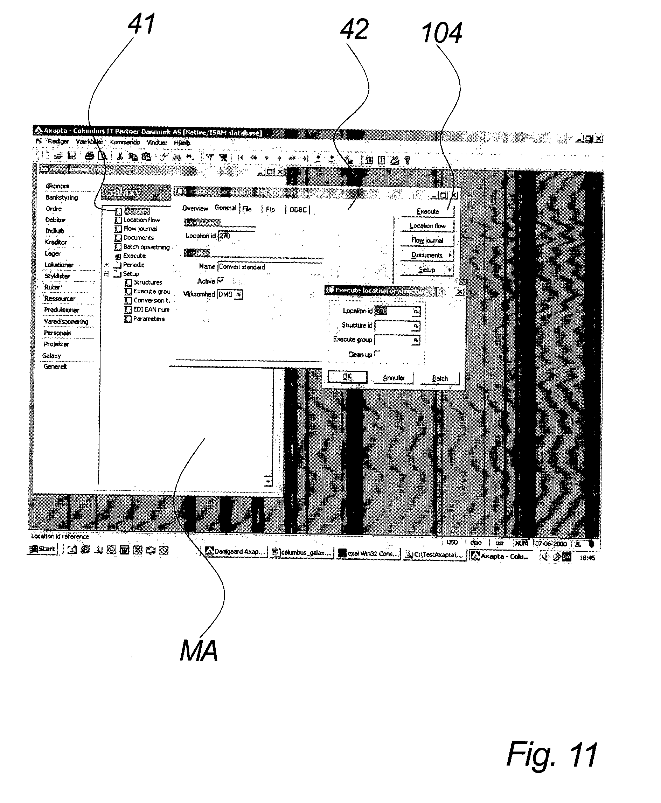

Fig. 11 illustrates the initiation of a top-level conversion as described. In the pop-up-menu 42, the thumbnail index "General" is selected and the button "Execute" 104 is activated.

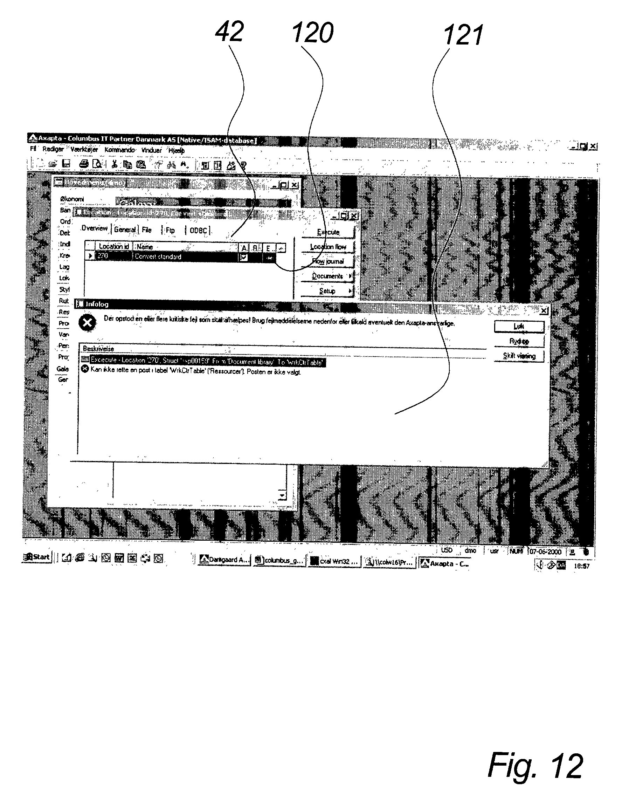

The result of an example of a top-level conversion is illustrated in fig. 12. An error has occurred, indicated by the marking of "E" 120 in the pop-up-menu 42. An error report is available in box 121.

The error may be traced by selecting the pop-up-box 101 (corresponding to the situation shown in fig. 10). In this box, it is indicated by the marking of "E" 130 that a conversion error has occurred in connection with the conversion of the location ID with structure ID "exp00159", creating a "Documents error" 131.

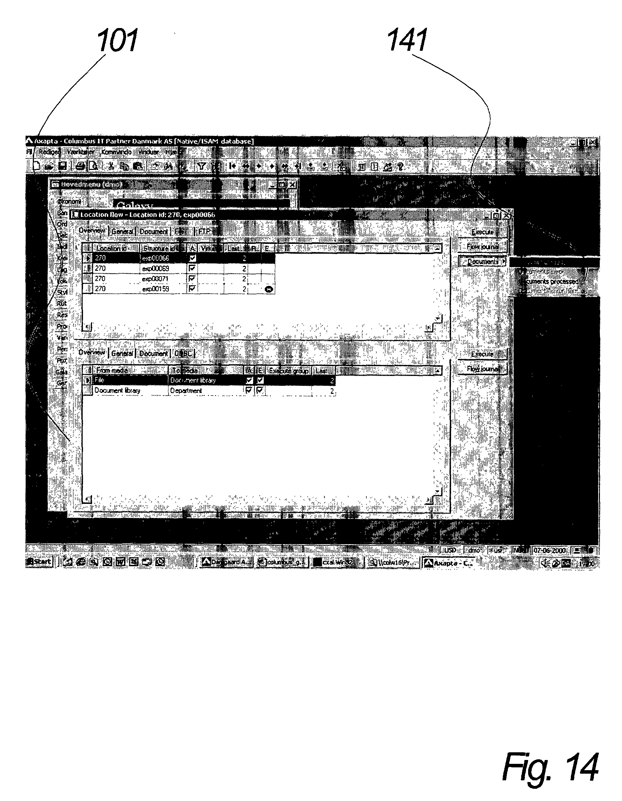

Similarly, it can be seen in fig. 14 that by selecting the other location IDs one by one, the conversions have been executed without errors, as indicated by "Documents processed" 141 as shown for structure ID "exp00066".

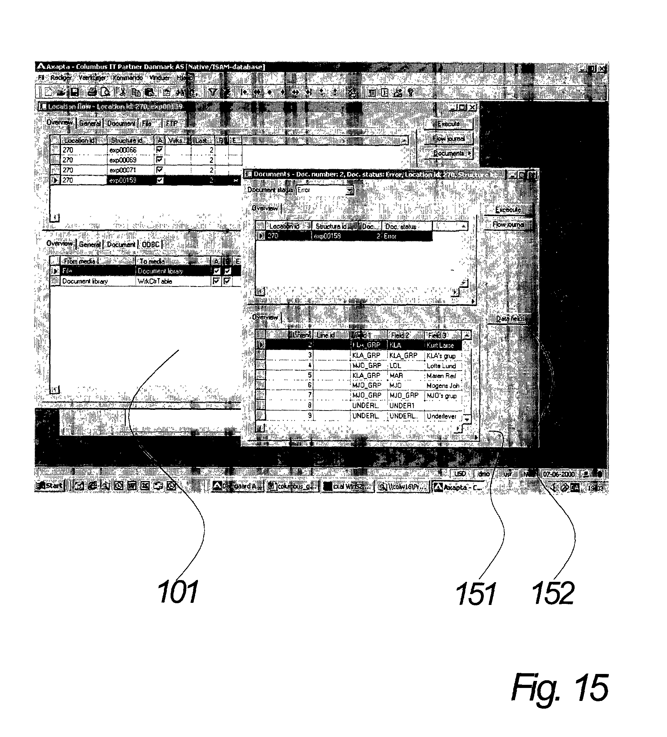

Returning to the location ID with structure ID "exp00159", the information which has been converted to the intermediate database "Document Library" may be seen in a pop-up-box 151 as shown in fig. 15. Further information on the respective data fields may be viewed one by one by selecting the appropriate fields and activating the button "Data fields" 152, which may provide the necessary information in order to be able to correct an error.

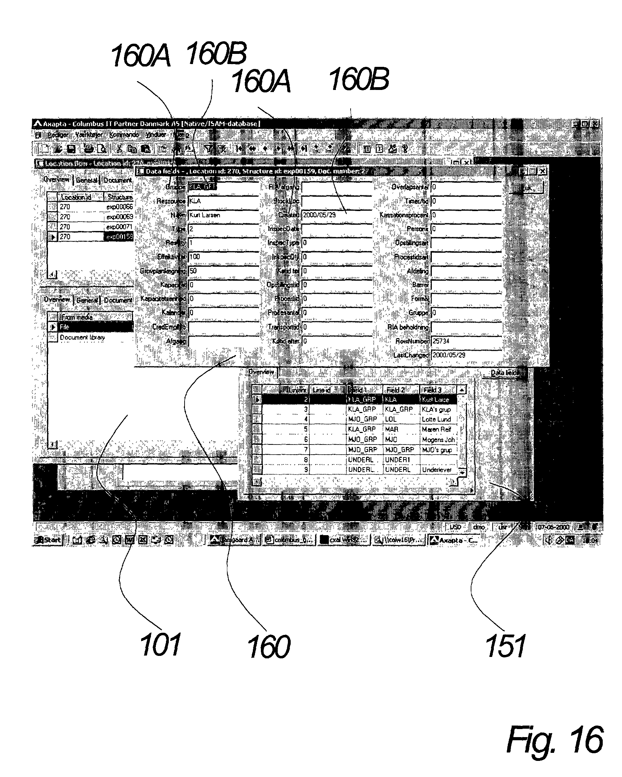

An example of the contents of the data fields in the "Document Library" can be seen in the table in box 160 in fig. 16.

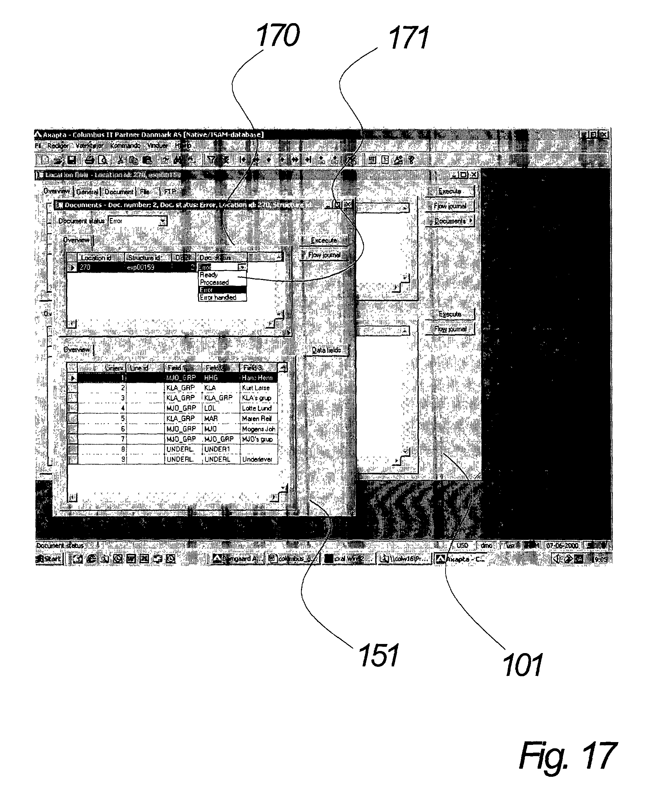

When the error has been located and corrected, it will not be necessary to repeat the partial conversions for which no errors occurred. As illustrated in fig. 17, the "Document status" 170 in box 151 for the location ID with structure ID "exp00159" may be changed to status "ready" 171, making it possible to initiate partial conversion from the intermediate database "Document Library" of this particular file.

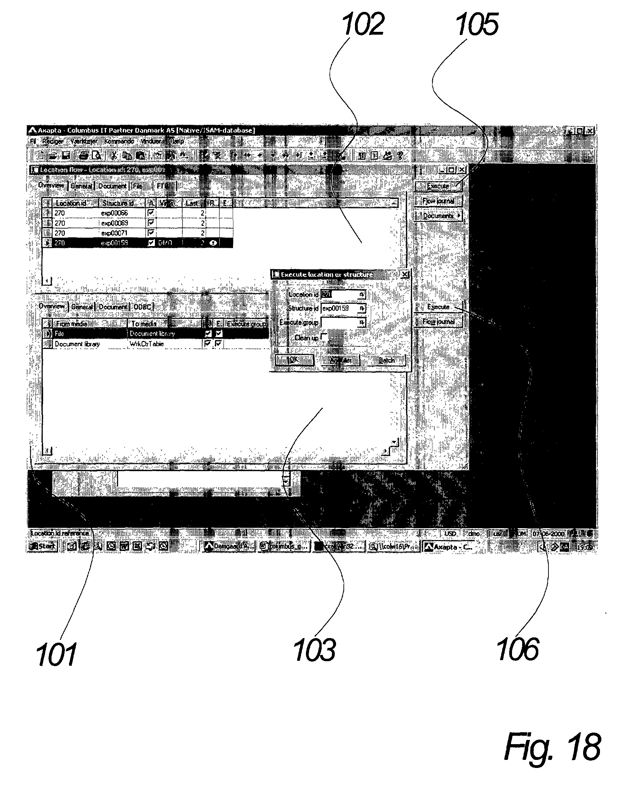

This is illustrated in fig. 18 (corresponding to fig. 10), which shows the initiation of a conversion of the location ID with structure ID "exp00159"only, i.e. a medium level conversion as described earlier. The initiation of the conversion is activated by the button "Execute" 105. The other location IDs have already been converted and do thus not need be converted again.

If the error had occurred in the second data flow, i.e. the partial conversion from the intermediate database "Document Library" to the output database, it would only be necessary to initiate a bottom-level conversion, e.g. a partial conversion from the "Document Library" to the output database, activated by the button 106.

A further important feature of the invention will now be described with reference to fig. 10. Two buttons 107 and 108 in the pop-up-menu 101 are of importance. These buttons marked" Flow journal" will, when activated, reveal a file containing all flow processes that have been performed in the system, indicating references to files, documents etc. having been processed, information on the status of the respective processes and the relevant time of processing.

The button 108 will reveal file-covering processes executed by a single selected partial process, e.g. the conversion from "File" to "Document Library" for the selected structure ID "exp00066", while the button 107 will reveal a file covering all partial processes executed for a selected structure ID.

This feature will provide the user wit the full story on the processes that have been executed and the corresponding results, for example status of documents processed, such as "Error", "Ready", "Processed" and "Error handled".

In the above, the invention has been described in connection with conversions. However, these conversions may obviously also constitute what is known as integrations or migrations, and the invention may serve to transmit data from one database to another or vice versa continuously or on a regular basis.

As regards the error reports and indications of such reports or errors, they have been shown to emerge on the visual user interface, e.g. on the screen, in the above. However, it is important to point out that the invention facilitates communication of these reports and indications in a number of ways as characterized in the claims. As an example, the error reports may be sent by e-mail or by other means of external communication to a location or a supervisor of the system or they may be directed to one or more pre-selected users, preferably listed in order of priority.

Finally, it should be emphasized that the illustrated embodiment is only an example of the invention. Many other applications may be applied within the scope of the invention.

## Claims

1. Database conversion or integration editor (DCE) comprising
data input means for inputting of database representing fields (DRF) having an input syntax (IS),
said conversion editor comprising
means for converting said database representing fields (DRF) into an intermediate database (TDB) of converted database representing fields (CDRF), said converted database representing fields (CDRF) having an output syntax (OS).

2. Database conversion or integration editor (DCE) according to claim 1,
wherein said means of converting said database representing fields into an intermediate database (TDB) comprises graphical mapping means (82) adapted to define the corresponding input syntax (IS, 83) and output syntax (OS, 84),
said graphical mapping means (82) comprising fill-in tables for user inputting of corresponding input field (83) values and output field (84) values.

3. Database conversion or integration editor (DCE) according to claim 1 or 2,
wherein the editor comprises graphical data structure mapping (61, 62, 63, 64, 65, 69), said graphical data structure mapping (61, 62, 63, 64, 65, 69) being adapted to define the data structure of the database representing fields (DRF) and/or the converted database representing fields (CDRF).

4. Database conversion or integration editor (DCE) according to claims 1-3,
wherein the editor comprises means for establishing writing of the converted database representing fields (CDRF) into an output database (ODB) by means of the database program control logic (DPCL).

5. Database conversion or integration editor (DCE) according to claims 1-4,
wherein said writing of the converted database representing fields (CDRF) into an output database (ODB) is performed in dependency of the data structure defined by means of said graphical data structure mapping (61, 62, 63, 64, 65, 69).

6. Database conversion or integration editor (DCE) according to claims 1-5,
wherein said database program control logic (DPCL) is established by means of an object-oriented database program language associated with the database program.

7. Database conversion or integration editor (DCE) according to claims 1-6,
wherein the editor comprises graphical selecting means (53; 59, 59A, 59B) for selecting at least one group of data fields (SIF; SCF) or combinations of groups of fields to be converted into the intermediate database (TDB) and/or the output database (ODB).

8. Database conversion or integration editor (DCE) according to claims 1-7,
said group of fields being data files comprised in a flat-export file, said flat-file preferably comprising fields listed in field lines (FL), each field line (FL) indicating a relation between the fields comprised in the field line (FL), said fields of each field line being similarly organized and thereby establishing an implicit categorization of the individual fields.

9. Database conversion or integration editor (DCE) according to claims 1-8,
wherein the editor comprises a graphical status manager (GSM, 171), said status manager (GSM, 170, 171) comprising means for manual or automatic establishment of the conversion status of the group of data fields (SIF; SCF) associated with the graphical status manager (GSM, 170, 171).

10. Database conversion or integration editor (DCE) according to claims 1-9,
wherein the editor comprises a data-processing manager (DPM) controlling the execution of the conversion of said groups of fields.

11. Database conversion or integration editor (DCE) according to claims 1-10, wherein the data processing manager (DPM) controls the execution of the conversion of said groups of fields (53; 59, 59A, 59B) on the basis of the conversion status established by means of said graphical status manager (GSM, 171).

12. Database conversion or integration editor (DCE) according to claims 1-11, wherein the editor comprises error detecting and error reporting means adapted to detect violations of predefined conversion rules incorporated in the editor.

13. Database conversion or integration editor (DCE) according to claims 1-12, wherein the editor comprises a graphical structure monitoring area (160, 151) for monitoring the contents and the structure of the converted data-representing field (CDRF) stored in said intermediate database (TDB).

14. Database conversion or integration editor (DCE) according to claims 1-13,
wherein the graphical structure monitoring area (160, 151) comprises at least one editor field comprising data as a descriptive statement (160A) and the actual converted data representing field (CDRF) being stored in said intermediate database (TDB).

15. Method of converting data from at least one input database representing a flat-file format (XF) into an output database (ODB),
said output database (ODB) comprising a set of output records (OR), each of said output records (OR) comprising at least one output field (OF),
said output database (ODB) defining an output syntax (OS) for at least one, preferably all output fields (OF),
said output database comprising at least one relation between at least two of said output fields (OF),
said method comprising at least one initial step of converting the syntax of the data from the at least one input data base (IDB) into the output syntax (OS) and storing the syntax-converted data into an intermediate database (TDB),
said method comprising at least one subsequent step of applying at least one relation between the syntax-converted data and storing said syntax-converted data in said output database associated with the at least one relation.

16. Method of converting data from at least one input database representing a flat-file format (XF) into an output database (ODB) according to claim 15,
whereby the establishment of the at least one relation in the output database (ODB) is established by means of structured feeding of the syntax-converted or a part of the syntax-converted data into the database via a database program control logic.

17. Method of converting input records (IR) contained in an input database (IDB) to output records (OR) contained in an output database (ODB),
said output records (OR) comprising output fields (OF) having a predefined output syntax (OS),
said input records (IR) comprising input fields (IF) having a predefined input syntax (IS),
said method comprising steps of mapping at least two input fields (IF) of said input database (IDB) into an intermediate database (TDB),
said mapping comprising steps of converting the syntax (IS) of said at least two input fields (IF) into said predefined output syntax (OS).

18. Method of converting input records (IR) contained in an input database (IDB) according to claim 17, whereby said mapping comprises steps of converting the syntax (IS) of substantially all input fields (IF) of the input database (IDB) into said predefined output syntax (OS).

19. Method of converting input records (IR) contained in an input database (IDB) according to claims 17 and 18, whereby said mapping comprises the steps of
exporting the input database (IDB) or at least part of the input database (IDB) to a representation or at least a part of a representation of said input database,
said representation comprising at least two field representations (FR), each representing an input field (OF) of the input database (ODB),
identifying at least two field representations (FR) of said representation and converting the syntax of said at least two field representations (FR) into said predefined output syntax (OS).

20. Method of converting input records (IR) contained in an input database (IDB) according to claims 17 - 19, said mapping including at least one routine check adapted to perform a preliminary check (PC) on fields of the intermediate database (TDB), said fields being predetermined.

21. Method of converting input records (IR) contained in an input database (IDB) according to claims 17 -20, whereby at least two fields of the intermediate database (TDB) having the input syntax (IS) are written into the output database (ODB) by means of the application logic (AL) of the input database (IDB).

22. A graphical user interface arrangement for preparing and facilitating conversion of a subset of data from a first database having a first format to a second database having a second format, said user interface comprising
graphical means for selecting an area (A1) for identifying a location of the subset(s) of data,
graphical means for selecting an area (A2) for defining format and structure of the subset(s) of data,
graphical means for selecting an area (A3) for selecting and/or defining one or more conversion elements for a record or records contained in the subset or subsets of data, and
graphical means for selecting an area (A4) for configuration of at least one partial conversion of a subset of data.

23. A graphical user interface arrangement according to claim 22, wherein the conversion elements may be standard, predefined and/or user-defined conversion tables.

24. A graphical user interface arrangement according to claims 22 and 23,
wherein the conversion elements may be standard, predefined and /or user-defined functions.

25. A graphical user interface arrangement for preparing and facilitating integration or migration of a subset of data from a first database having a first format to a second database having a second format, said user interface comprising
graphical means for selecting an area (A1) for identifying a location of the subset(s) of data,
graphical means for selecting an area (A2) for defining format and structure of the subset(s) of data,
graphical means for selecting an area (A3) for selecting and/or defining one or more conversion elements for a record or records contained in the subset or subsets of data, and
graphical means for selecting an area (A4) for configuration of at least one partial conversion of a subset of data.

26. A graphical user interface arrangement for preparing and aiding conversion, integration or migration of a subset of data from a first database having a first format to a second database having a second format, said user interface comprising
graphical means for selecting an area (A1) for identifying a location of the subset(s) of data,
graphical means for selecting an area (A2) for defining format and structure of the subset(s) of data,
graphical means for selecting an area (A3) for selecting and/or defining one or more conversion elements for a record or records contained in the subset or subsets of data,
graphical means for selecting an area (A4) for configuration of at least one partial conversion of a subset of data, and
graphical means for selecting one or more partial conversions and displaying a graphical result of the partial conversion(s).
27. A graphical user interface arrangement according to claim 26,
wherein the graphical means for selecting one or more partial conversions and displaying a graphical result of the partial conversion(s) comprises graphical means for selecting conversion comprising two or more subsequent partial conversions for one or more subsets of data.
